# NEUE EUROPÄISCHE PATENTSCHRIFT

(11) **EP 2 880 355 B2**
(45) Veröffentlichungstag und Bekanntmachung des Hinweises auf die Entscheidung über den Einspruch: **18.03.2020**
(45) Hinweis auf die Patenterteilung: 29.03.2017
(21) Anmeldenummer: 13734979.1
(22) Anmeldetag: 26.06.2013
(51) Int. Cl.: F16N 7/00, F16N 29/02

(54) **VERFAHREN ZUM BETREIBEN EINES ZENTRALSCHMIERSYSTEMS UND ZENTRALSCHMIERSYSTEM**
METHOD OF OPERATING A CENTRAL LUBRICATION SYSTEM AND LUBRICATION SYSTEM
PROCÉDÉ DE FONCTIONNEMENT D'UN DISPOSITIF DE GRAISSAGE CENTALISÉ ET DISPOSITIF DE GRAISSAGE CENTALISÉ

(30) Priorität: 26.06.2012 DE 102012210879; 10.10.2012 DE 102012218443
(43) Veröffentlichungstag der Anmeldung: 10.06.2015
(73) Patentinhaber: SKF Lubrication Systems Germany GmbH, 69190 Walldorf (DE)
(72) Erfinder: KREUTZKÄMPER, Jürgen, 74915 Waibstadt-Daisbach (DE); STOCKHAMMER, Raimund, 12205 Berlin (DE); SCHMIDT, Holger, 14532 Klein-Manchow (DE)
(74) Vertreter: Kuhstrebe, Jochen
(86) Internationale Anmeldenummer: PCT/EP2013/063350
(87) Internationale Veröffentlichungsnummer: WO 2014/001375

(56) Entgegenhaltungen:
- EP-A1- 0 728 984
- EP-A1- 0 728 984
- EP-A2- 0 498 242
- EP-A2- 0 498 242
- EP-A2- 2 505 905
- WO-A1-2010/085489
- WO-A1-2010/085489
- WO-A1-2011/123011
- WO-A1-2011/123011
- DE-A1- 2 929 580
- DE-A1- 2 929 580
- DE-A1-102010 016 412
- DE-B1- 2 822 442
- DE-C3- 2 514 022
- US-A- 5 495 917
- US-A- 5 800 139
- Offenkundige Vorbenutzung durch die Einsprechende Zeichnungen

## Beschreibung

Die Erfindung betrifft ein Verfahren zum Betreiben eines Zentralschmiersystems, umfassend ein Schmierstoffreservoir, das über mindestens eine Schmierstoffleitung mit einer Anzahl Schmierstoffversorgungseinrichtungen verbunden ist, sowie umfassend eine Steuerung zum gesteuerten Ausbringen von Schmierstoff aus den Schmierstoffversorgungseinrichtungen. Des Weiteren betrifft die Erfindung ein solches Zentralschmiersystem. Zentralschmiersysteme der gattungsgemäßen Art sind aus der WO 2011/123011 A1 bekannt. Ähnliche Lösungen zeigen die EP 0 498 242 A2, die EP 0 728 984 A1, die WO 2010/085489 A1 und die DE 29 29 580 A1.

Zentralschmiersysteme dieser Art werden eingesetzt, wenn in einer Maschine bzw. einer Anlage eine Anzahl an Schmierstellen mit Schmiermittel versorgt werden müssen. Dabei wird von einer Steuerung veranlasst periodisch ein Signal ausgegeben, das veranlasst, dass die Schmierstoffversorgungseinrichtungen eine eingestellte Menge an Schmiermittel ausbringen. Die Schmierstoff-Menge, die pro Zyklus, d. h. pro vorgegebenem Takt, ausgebracht wird, kann eingestellt werden, liegt dann aber (gegebenenfalls bis zu einer Verstellung) fest.

So ist es bei vorbekannten Systemen möglich, die auszugebende Menge des Schmierstoffs je Schmierstelle individuell in bestimmten Grenzen einzustellen (z. B. in einem Bereich zwischen 0,01 und 1,5 cm³ pro Schmierimpuls) bzw. die Schmierfrequenz bzw. den Schmierimpuls durch entsprechende Impulsuntersetzer anzupassen. Allerdings liegt dann für eine konkrete Schmierstelle die Schmiermenge pro Schmierimpuls fest.

In manchen Anwendungen tritt der Fall auf, dass über der Zeit Schmierstellen mit unterschiedlich viel Schmierstoff versorgt werden müssen, um einerseits eine Überschmierung und andererseits eine Mangelschmierung zu vermeiden. Als Beispiel sei eine Werkzeugmaschine mit mehreren Achsen genannt, wobei die verschiedenen Achsen während der Bearbeitung eines Werkstücks über die Zeit betrachtet einmal hoher Bewegung unterliegen und sich einmal in Ruhe befinden.

Insbesondere bei größeren Anlagen besteht dadurch der Nachteil, dass jede Schmierstelle zwangsgebunden stets bei jedem angesteuerten Zyklus der zentralen Pumpe des Zentralschmiersystems mit der ihr zugeteilten Menge an Schmierstoff versorgt wird. Durch eine entsprechende Einstellbarkeit lässt sich zwar die individuelle Menge Schmiermittel, die pro Schmierimpuls ausgebracht wird, in bestimmten Grenzen variieren und dem Bedarf entsprechend statisch anpassen, jedoch führt diese begrenzte Breite der Schmiermittelzuteilung stets zu notwendigen Kompromissen im Zentralschmiersystem und damit zur Über- bzw. Unterschmierung einzelner Schmierstellen bezogen auf den aktuellen optimalen Schmiermittelbedarf der betreffenden Schmierstelle. Nachteilig ist es also, dass für die oben genannten Fälle mit variablem Schmierstoffbedarf eine optimale Schmierung mit Vermeidung von Überschmierung und Unterschmierung mit vorbekannten Zentralschmierungen nicht erreichbar ist.

Der Erfindung liegt die Aufgabe zugrunde, ein Verfahren zum Betreiben eines Zentralschmiersystems der eingangs genannten Art bzw. ein Zentralschmiersystem so fortzubilden, dass es möglich ist, eine verbesserte und bedarfsgerechte bzw. bedarfskonforme Versorgung einer Anzahl von Schmierstellen zu ermöglichen. Demgemäß soll es möglich sein, eine möglichst individuell optimal angepasste Schmierstoffversorgung für jede Schmierstelle zu erreichen.

Die **Lösung** dieser Aufgabe durch die Erfindung ist dadurch gekennzeichnet, dass bei dem eingangs genannten Verfahren weiter vorgesehen ist, dass die Steuerung zumindest mit einer Anzahl der Schmierstoffversorgungseinrichtungen über mindestens eine Kommunikations- und/oder Energieleitung in Verbindung steht und über die mindestens eine Kommunikations- und/oder Energieleitung einer Anzahl von Schmierstoffversorgungseinrichtungen mindestens ein die Ausbringung von Schmierstoff betreffender Parameter vorgegeben wird, wobei der Parameter die Menge an Schmierstoff, die pro Schmierzyklus (d. h. pro Schmiertakt) an die Schmierstelle ausgegeben wird ist, wobei Mittel umfassend einen Aktuator in Form eines Kolbens eines Schmierstoff-Kolbenverteilers vorhanden sind, die an oder in der Schmierstoffversorgungseinrichtung angeordnet sind und mit denen der die Ausbringung von Schmierstoff betreffende Parameter durch eine Verstellung des Kolbens des Kolbenverteilers über die Kommunikations- und/oder Energieleitung beeinflusst werden kann, so dass pro Schmierimpuls eine andere Menge an Schmierstoff ausgestoßen wird, wobei zur Ausbringung von Schmierstoff der Kolben von einem elektrischen Antrieb betätigt wird.

Bevorzugt ist die Steuerung mit allen Schmierstoffversorgungseinrichtungen per Kommunikations- und/oder Energieleitung verbunden, wobei über die mindestens eine Kommunikations- und/oder Energieleitung allen Schmierstoffversorgungseinrichtungen mindestens ein die Ausbringung von Schmierstoff betreffender Parameter vorgegeben wird.

Mindestens zwei der Schmierstoffversorgungseinrichtungen können unterschiedliche, die Ausbringung von Schmierstoff betreffende Parameter vorgegeben werden.

Der Anzahl Schmierstoffversorgungseinrichtungen können dabei jeweilige Mengen an auszubringendem Schmierstoff pro Zeit vorgegeben werden.

Vorzugsweise wird - gemäß der üblichen Betriebsweise von Zentralschmiersystemen - allen Schmierstoffversorgungseinrichtungen ein Schmierstoff-Ausbringzyklus synchron vorgegeben.

Die Übertragung von Informationen über die Kommunikations- und/oder Energieleitung kann elektrisch erfolgen.

Mindestens ein die Ausbringung von Schmierstoff betreffender Parameter mindestens einer Schmierstoffversorgungseinrichtung kann über die Kommunikations- und/oder Energieleitung auch zurück an die Steuerung übertragen und von dieser registriert werden. Damit lassen sich die einzelnen Schmierstoffversorgungseinrichtungen über die zur Steuerung vorhandene elektrische Verbindung auch elektrisch überwachen. Durch diesen Aufbau kann ebenfalls eine dynamische Regelung des Systems erfolgen.

Über die Kommunikations- und/oder Energieleitung wird gemäß einer Weiterbildung der Erfindung nicht nur ein - vorzugsweise elektrisches - Signal übertragen; es kann auch vorgesehen sein, dass neben elektrischen Steuersignalen auch Energie an zumindest eine der Schmierstoffversorgungseinrichtungen übertragen wird. Diese Energie kann dabei elektrischer, hydraulischer und/oder pneumatischer Art sein.

Damit ist es möglich, im gegebenen Falle für die Verstellung von Parametern in den Schmierstoffversorgungseinrichtungen zusammen mit dem Signal selber auch die Energie zu liefern, um die Verstellung bzw. Einstellung vornehmen zu können.

Das vorgeschlagene Zentralschmiersystem zeichnet sich erfindungsgemäß dadurch aus, dass die Steuerung zumindest mit einer Anzahl der Schmierstoffversorgungseinrichtungen über mindestens eine Kommunikations- und/oder Energieleitung in Verbindung steht, wobei die Kommunikations- und/oder Energieleitung mit Mitteln verbunden sind, die an oder in der Schmierstoffversorgungseinrichtung angeordnet sind und mit denen ein die Ausbringung von Schmierstoff betreffender Parameter beeinflusst werden kann, wobei der Parameter die Menge an Schmierstoff, die pro Schmierzyklus (d. h. pro Schmiertakt) an die Schmierstelle ausgegeben wird ist, wobei die Mittel zur Beeinflussung eines die Ausbringung von Schmierstoff betreffender Parameters einen Aktuator in einem Schmierstoff-Verteilelement umfasst, wobei der Aktuator mit einem ihn betätigenden elektrischen Antrieb in Verbindung steht und wobei der Aktuator der Kolben in einem Schmierstoff-Kolbenverteiler ist und wobei der Kolben des Kolbenverteilers über die Kommunikationsund/oder Energieleitung verstellbar ist, so dass pro Schmierimpuls eine andere Menge an Schmierstoff ausgestoßen wird.

Die Kommunikations- und/oder Energieleitung kann zumindest abschnittsweise an oder in der Schmierstoffleitung verlaufen.

Die Kommunikations- und/oder Energieleitung ist bevorzugt ausgebildet, um sowohl ein elektrisches Signal als auch Energie zu übertragen; sie ist bevorzugt ausgebildet, um elektrisch, hydraulisch und/oder pneumatisch Energie zu übertragen.

Mit der vorgeschlagenen Vorgehensweise bzw. Ausgestaltung ist es möglich, eine individuelle und unabhängige Ansteuerung jeder einzelnen Schmierstelle zu ermöglichen, so dass diese den konkreten und aktuellen Anforderungen gerecht wird, d. h. dass weder Mangelschmierung noch Überschmierung für jede der Schmierstellen vorliegt. Es kann also eine individuelle, unabhängige und bedarfsgerechte Steuerung der Versorgung einzelner Schmierstellen in einem gattungsgemäßen Zentralschmiersystem erfolgen.

Das Konzept gemäß der vorliegenden Idee stellt also darauf ab, dass es bei einem Zentralschmiersystem ermöglicht wird, die Schmierstoffversorgung einer jeden einzelnen Schmierstelle individuell anzusteuern.

Die Ansteuerung dieser Schmierstoffversorgungseinrichtungen erfolgt bevorzugt elektrisch. Dabei wird jede Schmierstoffversorgungseinrichtung einzeln oder über eine gemeinsame Steuerleitung mit der Zentralschmiersystem- Steuereinheit verbunden und kann über
diese individuell angesteuert werden. Die Steuerung der Verteiler erfolgt beispielsweise über ein in jedem Verteiler verbauten Aktuator, der entsprechend einem Signalimpuls der Zentralschmiersystem-Steuerung den Kolben eines Kolbenverteilers ansteuert bzw. sperrt.

Die elektrische Steuersignal-Verbindung zwischen der Zentralschmiersystem-Steuerung und den Verteilern erfolgt entweder über separate Signalleitungen oder über in die Schmierstoffzuleitungen integrierte Verdrahtungssysteme.

Durch diese Einzelansteuerung jeder Schmierstoffversorgungseinrichtung lässt sich jede einzelne Schmierstelle individuell und unabhängig von anderen Schmierstellen ansteuern, wodurch der Schmierstoffausstoß zu den Schmierstellen optimal dosiert werden kann.

Ändern sich beispielsweise die Bearbeitungsschritte in einer Werkzeugmaschine, so können die betroffenen Schmierstellen auf die neuen Bedarfe an Schmierstoff dynamisch angepasst werden.

Wenn vorliegend davon gesprochen wird, dass das Zentralschmiersystem eine Steuerung aufweisen soll, ist hierunter natürlich auch zu verstehen, dass die Steuerung einer Maschine, die mit dem Zentralschmiersystem ausgestattet ist, für die genannten Steuerzwecke genutzt wird. In diesem Falle ist also in die Maschinensteuerung auch die Steuerung des Zentralschmiersystems integriert.

Es besteht auch die Möglichkeit, dass die hier angesprochenen Schmierstoffversorgungseinrichtungen nicht nur einen einzigen Abgang zu einer Schmierstelle aufweisen, sondern mehrere hiervon.

Es kann in letzterem Falle vorgesehen sein, dass alle Abgänge zu mehreren Schmierstellen mit denselben Ausbring-Parametern arbeiten, d. h. sie werden über die Kommunikations- und/oder Energieleitung mit denselben Parametern angesteuert.

Es ist aber auch möglich, dass innerhalb einer Schmierstoffversorgungseinrichtung die mehreren Abgänge zu Schmierstellen unterschiedlich angesteuert werden, was wiederum über die Kommunikations- und/oder Energieleitung entsprechend veranlasst werden kann.

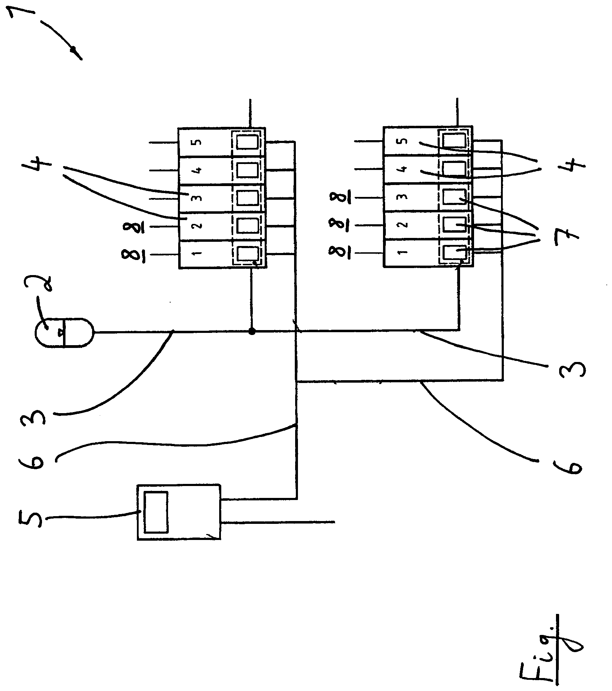

In der Zeichnung ist ein Ausführungsbeispiel der Erfindung dargestellt. Die einzige Figur zeigt schematisch ein Zentralschmiersystem zur Versorgung einer Maschine, die eine Anzahl von Schmierstellen aufweist.

In der Figur ist ein Zentralschmiersystem 1 skizziert, mit dem eine Anzahl Schmierstellen 8 einer Maschine, beispielsweise einer Werkzeugmaschine, mit Schmierstoff versorgt werden. Der Schmierstoff ist in einem Schmierstoffreservoir 2 enthalten. Über Schmierstoffleitungen 3 kann der Schmierstoff (mittels nicht dargestellter Pumpenmittel) zu Schmierstoffversorgungseinrichtungen 4 gefördert werden. Jede Schmierstoffversorgungseinrichtung 4 hat ein Schmierstoff-Verteilelement 7, beispielsweise in Form eines Kolbenverteilers.

Eine elektronische Steuerung 5 steuert die Ausbringung von Schmierstoff über die Schmierstoffversorgungseinrichtung 4 an die Schmierstellen 8, indem periodisch ein Schmierimpuls abgegeben wird, der die Schmierstoffversorgungseinrichtung 4 veranlasst, eine definierte Menge an Schmierstoff zur Schmierstelle 8 auszustoßen.

Wesentlich ist, dass von der Steuerung 5 aus eine Kommunikations- und/oder Energieleitung 6 zu den Schmierstoffversorgungseinrichtungen 4 führt. Über diese Kommunikations- und/oder Energieleitung 6 kann in der Schmierstoffversorgungseinrichtung 4 ein Element beeinflusst bzw. verändert werden, das für die Ausbringung von Schmierstoff an die Schmierstelle 8 verantwortlich ist bzw. diese bestimmt.

So kann über die Kommunikations- und/oder Energieleitung 6 eine Verstellung des Kolbens des Kolbenverteilers erfolgen, so dass pro Schmierimpuls eine andere Menge an Schmierstoff ausgestoßen wird.

Damit kann erreicht werden, dass beispielsweise im Falle einer Werkzeugmaschine im Verlauf des Bearbeitungszyklus eines Werkstücks zeitvariant verschiedene Schmierstellen 8 mit unterschiedlichen Mengen an Schmiermittel versorgt werden, weil sich die Bewegungsintensität entsprechender Maschinenachse verändert. Sowohl Mangelschmierung als auch Überschmierung kann so verhindert werden.

### Bezugszeichenliste

- 1: Zentralschmiersystem
- 2: Schmierstoffreservoir
- 3: Schmierstoffleitung
- 4: Schmierstoffversorgungseinrichtung
- 5: Steuerung
- 6: Kommunikations- und/oder Energieleitung
- 7: Schmierstoff-Verteilelement
- 8: Schmierstelle

## Patentansprüche

1. Verfahren zum Betreiben eines Zentralschmiersystems (1), umfassend ein Schmierstoffreservoir (2), das über mindestens eine Schmierstoffleitung (3) mit einer Anzahl Schmierstoffversorgungseinrichtungen (4) verbunden ist, sowie umfassend eine Steuerung (5) zum gesteuerten Ausbringen von Schmierstoff aus den Schmierstoffversorgungseinrichtungen (4), wobei die Steuerung (5) zumindest mit einer Anzahl der Schmierstoffversorgungseinrichtungen (4) über mindestens eine Kommunikations- und/oder Energieleitung (6) in Verbindung steht und über die mindestens eine Kommunikations- und/oder Energieleitung (6) einer Anzahl von Schmierstoffversorgungseinrichtungen (4) mindestens ein die Ausbringung von Schmierstoff betreffender Parameter vorgegeben wird, wobei der Parameter die Menge an Schmierstoff, die pro Schmierzyklus an eine Schmierstelle ausgegeben wird ist, wobei Mittel umfassend einen Aktuator in Form eines Kolbens eines Schmierstoff-Kolbenverteilers (7) vorhanden sind, die an oder in der Schmierstoffversorgungseinrichtung (4) angeordnet sind und mit denen der die Ausbringung von Schmierstoff betreffende Parameter durch Verstellung des Kolbens des Kolbenverteilers über die Kommunikations- und/oder Energieleitung (6) beeinflusst werden kann, so dass pro Schmierimpuls eine andere Menge an Schmierstoff ausgestoßen wird, wobei zur Ausbringung von Schmierstoff der Kolben von einem elektrischen Antrieb betätigt wird.

2. Verfahren nach Anspruch 1, **dadurch gekennzeichnet, dass** mindestens zwei der Schmierstoffversorgungseinrichtungen (4) unterschiedliche, die Ausbringung von Schmierstoff betreffende Parameter vorgegeben werden.

3. Verfahren nach Anspruch 1 oder 2, **dadurch gekennzeichnet, dass** der Anzahl Schmierstoffversorgungseinrichtungen (4) jeweilige Mengen an auszubringendem Schmierstoff pro Zeit vorgegeben werden.

4. Verfahren nach einem der Ansprüche 1 bis 3, **dadurch gekennzeichnet, dass** allen Schmierstoffversorgungseinrichtungen (4) ein Schmierstoff-Ausbringzyklus synchron vorgegeben wird.

5. Verfahren nach einem der Ansprüche 1 bis 4, **dadurch gekennzeichnet, dass** die Übertragung von Informationen über die Kommunikations- und/oder Energieleitung (6) elektrisch erfolgt.

6. Verfahren nach einem der Ansprüche 1 bis 5, **dadurch gekennzeichnet, dass** mindestens ein die Ausbringung von Schmierstoff betreffender Parameter mindestens einer Schmierstoffversorgungseinrichtung (4) über die Kommunikations- und/oder Energieleitung (6) zurück an die Steuerung (5) übertragen und von dieser registriert wird.

7. Verfahren nach einem der Ansprüche 1 bis 6, **dadurch gekennzeichnet, dass** über die Kommunikations- und/oder Energieleitung (6) neben elektrischen Steuersignalen auch Energie an zumindest eine Schmierstoffversorgungseinrichtung (4) übertragen wird.

8. Verfahren nach Anspruch 7, **dadurch gekennzeichnet, dass** über die Kommunikations- und/oder Energieleitung (6) elektrische, hydraulische und/oder pneumatische Energie übertragen wird.

9. Zentralschmiersystems (1), umfassend ein Schmierstoffreservoir (2), das über mindestens eine Schmierstoffleitung (3) mit einer Anzahl Schmierstoffversorgungseinrichtungen (4) verbunden ist, sowie umfassend eine Steuerung (5) zum gesteuerten Ausbringen von Schmierstoff aus den Schmierstoffversorgungseinrichtungen (4), wobei die Steuerung (5) zumindest mit einer Anzahl der Schmierstoffversorgungseinrichtungen (4) über mindestens eine Kommunikations- und/oder Energieleitung (6) in Verbindung steht, wobei die Kommunikations- und/oder Energieleitung (6) mit Mitteln verbunden sind, die an oder in der Schmierstoffversorgungseinrichtung (4) angeordnet sind und mit denen ein die Ausbringung von Schmierstoff betreffender Parameter beeinflusst werden kann, wobei der Parameter die Menge an Schmierstoff, die pro Schmierzyklus an eine Schmierstelle ausgegeben wird ist, wobei die Mittel zur Beeinflussung eines die Ausbringung von Schmierstoff betreffender Parameters einen Aktuator in einem Schmierstoff-Verteilelement (7) umfasst, wobei der Aktuator mit einem ihn betätigenden elektrischen Antrieb in Verbindung steht, wobei der Aktuator der Kolben in einem Schmierstoff-Kolbenverteiler ist und wobei der Kolben über die Kommunikations- und/oder Energieleitung (6) verstellbar ist, so dass pro Schmierimpuls eine andere Menge an Schmierstoff ausgestoßen wird.

10. Zentralschmiersystem nach Anspruch 9, **dadurch gekennzeichnet, dass** die Kommunikations- und/oder Energieleitung (6) zumindest abschnittsweise an oder in der Schmierstoffleitung (3) verläuft.

11. Zentralschmiersystem nach Anspruch 9 oder 10, **dadurch gekennzeichnet, dass** die Kommunikations- und/oder Energieleitung (6) ausgebildet ist, um sowohl ein elektrisches Signal als auch Energie zu übertragen.

12. Zentralschmiersystem nach Anspruch 11, **dadurch gekennzeichnet, dass** die Kommunikations- und/oder Energieleitung (6) ausgebildet ist, um elektrisch, hydraulisch und/oder pneumatisch Energie zu übertragen.

## Claims

1. Method for operating a central lubrication system (1), comprising a lubricant reservoir (2) which is connected to a number of lubricant supply devices (4) via at least one lubricant line (3), and comprising a controller (5) for the controlled discharge of lubricant from the lubricant supply devices (4), wherein the controller (5) is connected at least to a number of the lubricant supply devices (4) via at least one communication line (6) and/or power line (6), and at least one parameter relating to the discharge of lubricant is predefined for a number of lubricant supply devices (4) via the at least one communication line (6) and/or power line (6), wherein the parameter is the quantity of lubricant which is output to a lubrication point per lubrication cycle, wherein means comprising an actuator in the form of a piston of a lubricant piston distributor (7) are present which are arranged on or in the lubricant supply device (4) and with which the parameter relating to the discharge of lubricant can be influenced by adjusting the piston of the piston distributor via the communication line (6) and/or power line (6), so that a different quantity of lubricant is ejected per lubrication pulse, wherein the piston is actuated by an electric drive for the discharge of lubricant.

2. Method according to Claim 1, **characterized in that** different parameters relating to the discharge of lubricant are predefined at least two of the lubricant supply devices (4).

3. Method according to Claim 1 or 2, **characterized in that** respective quantities of lubricant which is to be discharged are predefined per unit of time for the number of lubricant supply devices (4).

4. Method according to one of Claims 1 to 3, **characterized in that** a lubricant discharge cycle is predefined synchronously for all the lubricant supply devices (4).

5. Method according to one of Claims 1 to 4, **characterized in that** the transmission of information takes place electrically via the communication line (6) and/or power line (6).

6. Method according to one of Claims 1 to 5, **characterized in that** at least one parameter relating to the discharge of lubricant of at least one lubricant supply device (4) is transmitted back to the controller (5) via the communication line (6) and/or power line (6) and registered thereby.

7. Method according to one of Claims 1 to 6, **characterized in that** in addition to electrical control signals, power is also transmitted to at least one lubricant supply device (4) via the communication line (6) and/or power line (6).

8. Method according to Claim 7, **characterized in that** electrical, hydraulic and/or pneumatic power is transmitted via the communication line (6) and/or power line (6).

9. Central lubrication system (1), comprising a lubricant reservoir (2) which is connected to a number of lubricant supply devices (4) via at least one lubricant line (3), and comprising a controller (5) for the controlled discharge of lubricant from the lubricant supply devices (4), wherein the controller (5) is connected at least to a number of the lubricant supply devices (4) via at least one communication line (6) and/or power line (6), wherein the communication line (6) and/or power line (6) are/is connected to means which are arranged on or in the lubricant supply device (4) and with which a parameter relating to the discharge of lubricant can be influenced, wherein the parameter is the quantity of lubricant which is output to a lubrication point per lubrication cycle, wherein the means for influencing a parameter relating to the discharge of lubricant comprise an actuator in a lubricant distributor element (7), wherein the actuator is connected to an electric drive which actuates it, wherein the actuator is the piston in a lubricant piston distributor and wherein the piston can be adjusted via the communication line (6) and/or power line (6) so that a different quantity of lubricant is ejected per lubrication pulse.

10. Central lubrication system according to Claim 9, **characterized in that** the communication line (6) and/or power line (6) run(s) at least in certain sections on or in the lubricant line (3).

11. Central lubrication system according to Claim 9 or 10, **characterized in that** the communication line (6) and/or power line (6) are/is designed to transmit both an electrical signal and power.

12. Central lubrication system according to Claim 11, **characterized in that** the communication line (6) and/or power line (6) is designed to transmit power electrically, hydraulically and/or pneumatically.

## Revendications

1. Procédé de fonctionnement d'un dispositif de graissage centralisé (1), comprenant un réservoir de lubrifiant (2) qui est raccordé à un certain nombre de dispositifs d'alimentation en lubrifiant (4) par le biais d'au moins une conduite de lubrifiant (3), comprenant également une commande (5) pour l'extraction commandée de lubrifiant à partir des dispositifs d'alimentation en lubrifiant (4), la commande (5) étant en liaison au moins avec un certain nombre des dispositifs d'alimentation en lubrifiant (4) par le biais d'au moins une conduite de communication et/ou d'énergie (6), et au moins un paramètre concernant l'extraction de lubrifiant étant prescrit à un certain nombre de dispositifs d'alimentation en lubrifiant (4) par le biais de l'au moins une conduite de communication et/ou d'énergie (6), le paramètre étant la quantité de lubrifiant qui est délivrée à un point de graissage par cycle de graissage, des moyens comprenant un actionneur sous la forme d'un piston d'un distributeur à piston de lubrifiant (7) étant présents, qui sont disposés sur ou dans le dispositif d'alimentation en lubrifiant (4) et avec lesquels il est possible d'agir sur le paramètre concernant l'extraction de lubrifiant par ajustement du piston du distributeur à piston par l'intermédiaire de la conduite de communication et/ou d'énergie (6), de sorte qu'une autre quantité de lubrifiant est éjectée par impulsion de graissage, le piston étant actionné par un entraînement électrique pour l'extraction de lubrifiant.

2. Procédé selon la revendication 1, **caractérisé en ce que** différents paramètres concernant l'extraction de lubrifiant sont prescrits au moins deux des dispositifs d'alimentation en lubrifiant (4).

3. Procédé selon la revendication 1 ou 2, **caractérisé en ce que** des quantités respectives de lubrifiant à extraire par période de temps sont prescrites aux plusieurs dispositifs d'alimentation en lubrifiant (4).

4. Procédé selon l'une des revendications 1 à 3, **caractérisé en ce qu'**un cycle d'extraction de lubrifiant est prescrit de façon synchrone à tous les dispositifs d'alimentation en lubrifiant (4).

5. Procédé selon l'une des revendications 1 à 4, **caractérisé en ce que** la transmission d'informations s'effectue électriquement par le biais de la conduite de communication et/ou d'énergie (6).

6. Procédé selon l'une des revendications 1 à 5, **caractérisé en ce qu'**au moins un paramètre concernant l'extraction de lubrifiant d'au moins un dispositif d'alimentation en lubrifiant (4) est, par le biais de la conduite de communication et/ou d'énergie (6), transmis en retour à la commande (5) et enregistré par celle-ci.

7. Procédé selon l'une des revendications 1 à 6, **caractérisé en ce que**, par le biais de la conduite de communication et/ou d'énergie (6), outre des signaux de commande électriques, également de l'énergie est transmise à au moins un dispositif d'alimentation en lubrifiant (4).

8. Procédé selon la revendication 7, **caractérisé en ce que** de l'énergie électrique, hydraulique et/ou pneumatique est transmise par le biais de la conduite de communication et/ou d'énergie (6).

9. Dispositif de graissage centralisé (1), comprenant un réservoir de lubrifiant (2) qui est raccordé à un certain nombre de dispositifs d'alimentation en lubrifiant (4) par le biais d'au moins une conduite de lubrifiant (3), et comprenant également une commande (5) pour l'extraction commandée de lubrifiant à partir des dispositifs d'alimentation en lubrifiant (4), la commande (5) étant en liaison au moins avec un certain nombre de dispositifs d'alimentation en lubrifiant (4) par le biais d'au moins une conduite de communication et/ou d'énergie (6), la conduite de communication et/ou d'énergie (6) étant raccordée à des moyens qui sont disposés sur ou dans le dispositif d'alimentation en lubrifiant (4) et avec lesquels il possible d'agir sur un paramètre concernant l'extraction de lubrifiant, le paramètre étant la quantité de lubrifiant qui est délivrée à un point de graissage par cycle de graissage, les moyens d'action sur un paramètre concernant l'extraction de lubrifiant comprenant un actionneur dans un élément de distribution de lubrifiant (7), l'actionneur étant en liaison avec un entraînement électrique qui l'actionne, l'actionneur étant le piston dans un distributeur à piston de lubrifiant et le piston étant ajustable par l'intermédiaire de la conduite de communication et/ou d'énergie (6), de sorte qu'une autre quantité de lubrifiant est éjectée par impulsion de graissage.

10. Dispositif de graissage centralisé selon la revendication 9, **caractérisé en ce que** la conduite de communication et/ou d'énergie (6) s'étend au moins par tronçons sur ou dans la conduite de lubrifiant (3).

11. Dispositif de graissage centralisé selon la revendication 9 ou 10, **caractérisé en ce que** la conduite de communication et/ou d'énergie (6) est constituée pour transmettre aussi bien un signal électrique que de l'énergie.

12. Dispositif de graissage centralisé selon la revendication 11, **caractérisé en ce que** la conduite de communication et/ou d'énergie (6) est constituée pour transmettre de l'énergie électriquement, hydrauliquement et/ou pneumatiquement.
